# EUROPEAN PATENT APPLICATION

(11) **EP 3 778 787 A1**
(43) Date of publication of application: **17.02.2021**
(21) Application number: 19191245.0
(22) Date of filing: 12.08.2019
(51) Int. Cl.: C09D 5/33, C09D 7/61, C09D 7/40, C09D 5/00, C09D 5/02, C09D 7/60

(54) **PAINT COMPOSITION**

(71) Applicant: M. Swarovski Gesellschaft m.b.H., 3300 Amstetten (AT)
(72) Inventor: BURGHARDT, Tomasz E., 3331 Kematen an der Ybbs (AT); FASCHING, Alexander, 3325 Ferschnitz (AT)
(74) Representative: Torggler & Hofinger Patentanwälte

(57) **Abstract**

Paint composition (1) for producing an environmentally-friendly coating (2) with rough surface and high slip resistance, wherein the paint composition (1) comprises a water-borne and/or water-dispersible resin, colour composition, and particles increasing slip resistance (3), wherein the paint composition (1) contains
- between 5 and 75 weight percent of water-borne and/or water-dispersible resin, preferably between 5 and 70 weight percent, and more preferably between 10 and 50 weight percent of water-borne and/or water-dispersible resin,
- between 5 and 90 weight percent of colour composition, preferably between 10 and 80 weight percent, and more preferably between 30 and 70 weight percent, of colour composition,
- between 10 and 85 weight percent of particles increasing slip resistance (3), preferably between 10 and 75 weight percent, and more preferably between 20 and 50 weight percent, of particles increasing slip resistance (3).

## Description

The invention concerns a paint composition and a method for producing a coating with said paint composition, whereas such coating has simultaneously uneven surface and high slip resistance.

The current state of the art technologies for producing such compositions and coatings are based on chemical reactions occurring in situ or require the addition of heat to cure the coating.

For example, commonly used are compositions based on in situ polymerisation of monomers or oligomers derived from acrylate esters or other chemicals capable of entering into polymerisation reactions. Polymerization occurs upon contact with an initiator of a polymerisation reaction, which must be added very precisely and mixed appropriately, and then the coating must be applied immediately. Whereas such technology is considered as having negligible emissions of volatile organic compounds, the resin constituents themselves are volatile and flammable until applied and set by polymerisation. In addition, the initiator, usually an organic peroxide, is a material that requires special handling and precautions because of its chemical nature. Moreover, such technology is quite expensive.

Alternatively, coatings that require heat for application can be used. However, the use of heat is not environmentally friendly and there is a risk of burns to the application crew or starting a fire.

Plural component systems, where oligomers or polymers are mixed with other oligomers or polymers are also known in the art. However, such systems usually have viscosity that does not allow for formation of an uneven surface. Moreover, they usually contain as one of the ingredients toxic or otherwise dangerous chemicals like isocyanates, epoxides, amines, or others.

Other common coating technologies, like traditional paints, are not capable of simultaneously providing the desired effects of high environmental friendliness, rough surface, and high slip resistance.

For example, solvent-borne paints are a major source of volatile organic compounds, which are typically present in the quantities exceeding 20 weight percent, and as such do not meet the demand for environmental friendliness. In addition, during drying their surface is prone to shrinking and cracking, which negatively affects film strength. Furthermore, when applied at film builds required for an uneven surface, their drying time becomes excessively long because of solvents trapped under the formed skin.

While water-borne paints known in the art are devoid of the environmentally-detrimental emissions of volatile organic compounds, they suffer from other drawbacks associated with solventborne paints.

In published European patent application EP 0 764 699 A2 is described a water-borne binder and a paint composition that is resistant to wear. However, the surface of the described paint has to be assumed as flat because of the viscosity that permits for its application by spraying and thus uneven surface cannot be obtained.

In the present application, the term slip resistance refers to the extent to which a surface is slippery when touched by hand, by rubber, or by any other surface. In a preferred embodiment of the invention, high slip resistance is advantageous because it prohibits for example people or motorists from losing control on the surface.

In the present application, the term surface roughness refers to the difference between the highest and the lowest point of an applied coating. In the present application, the term rough coating refers to a coating that has regular or irregular ridges, where the ratio between the highest and the lowest point of the ridge is relatively high.

The purpose of the invention is to provide a novel paint composition, almost devoid of volatile organic compounds and toxic materials, and modified to avoid the drawbacks mentioned above and a method for producing a coating with said paint composition.

Surprisingly and contrary to the current knowledge of those skilled in the art, such a paint composition was successfully developed based on water-borne or water-dispersible acrylic resin, in which particles increasing slip resistance were incorporated, as is disclosed herein.

During the application process of the disclosed paint composition and during its usage, it is possible not only to achieve, but also to maintain under high stress a rough irregular or regular structure comprising ridges of various heights. This is also surprising and not known within the current state of knowledge, where paints are not used to maintain such structures under high stress, such as, for example, is occurring from vehicles if the coating is applied on a roadway surface.

This is being achieved by a paint composition with the features of claim 1 and a method for producing a coating with the said paint composition. Embodiments of the invention are defined in the dependent claims.

The paint composition described in this invention comprises a water-borne and/or water-dispersible resin, a colour composition, and particles increasing slip resistance.

One advantage of using a paint composition with a water-borne and/or water-dispersible resin would be in its environmental friendliness, caused by only miniscule content of volatile organic compounds, ease of handling , safety during transport and storage, and simplicity of application.

Unlike typical paints, the disclosed paint composition may have viscosity and rheology that permits for obtaining and maintaining high surface roughness in forms of regular or irregular ridges.

For example, the difference between the highest and lowest points of a ridge may be between 100 and 10000 micrometres, preferably between 250 and 5000 micrometres, and more preferably between 500 and 3000 micrometres.

For example, the ratio between the height of a ridge and its width may be between 0.1 to 3.0, preferably 0.5 to 2.0 and more preferably 0.7 to 1.5.

Moreover, a coating produced with such a paint composition has excellent durability, similar to that of coating compositions relying on in situ polymerization. This may even be achieved with a lower applied film build as compared to coatings known in the art. A high level of slip resistance can be obtained by incorporation of various particles. Optionally, supplementary enhancing additives can provide additional advantages.

According to the invention, the paint composition contains
- between 5 and 75 weight percent of water-borne and/or water-dispersible resin,
- between 5 and 90 weight percent of colour composition,
- between 10 and 85 weight percent of particles increasing slip resistance.

The paint composition may be prepared in a two-step preparation by intermixing and grinding the water-borne and/or water-dispersible resin with the colour composition, after which the particles increasing slip resistance may be added. Such preparation method is known to those skilled in the art and described, for example in US 6,689,824 B2.

The paint composition can contain between 5 and 60 weight percent, and preferably between 20 and 50 weight percent, of water-borne and/or water-dispersible resin.

It should be noted that in this application, the words binder and resin are used interchangeably, which is known by those skilled in the art.

Waterborne or water-dispersible resin can be a resinous polymeric or oligomeric material that can be dispersed in water, either due to its chemical nature or with the use of additives that facilitate such dispersion. Such resin can also be prepared in aqueous or water-containing medium.

Water content of the waterborne or water-dispersible resin is preferably below 75 weight per cent and more preferably below 50 weight per cent. The content of water that may be added to the coating composition or to the resins is such as to facilitate obtaining the desired properties and depends on the properties of such binders.

Water may thus be part of the described composition. Water addition step may be done at any stage of the preparation of the described composition.

Generally, the water-borne and/or water-dispersible resin can be a polymeric or oligomeric binder or a mixture of binders based on acrylate, polyester, urethane, urea, epoxy, vinyl, polystyrene, alkyd, polyether, and other organic and/or inorganic chemistries suitable for making a coating, with molecular weights suitable for preparing a coating, which is known by those skilled in the art. The binder can be modified to contain chemical moieties, either pendant or incorporated in the polymeric chain, that modify its properties.

The binder can be capable of, for example, cross-linking, self cross-linking, accelerated drying that occurs by evaporation or a chemical reaction of an additive either bound or otherwise present in the binder composition. The binder can also be an opaque or pearlescent or conducting polymer that give certain additional properties that may be desired.

The binder solution or dispersion can contain other additives, which may be required for its stability or other properties.

In a preferred embodiment, the water-borne and/or water-dispersible resin contains less than 10 weight percent, preferably below 5 weight percent, and more preferably below 2 weight percent, of volatile organic compounds. Said volatile organic compounds comprise total organic gases that include all volatiles other than methane, regardless of their legal status.

In a preferred embodiment, the paint composition contains less than 1.0 weight percent, preferably less than 0.5 weight percent, and more preferably less than 0.2 weight percent of any chemicals that are classified as toxic or highly toxic, as defined by European Chemical Agency or by the United States Environmental Protection Agency.

Generally, the paint composition may have a viscosity that prohibits free flow and rheological properties that permit for obtaining and maintaining rough surface. The viscosity and rheological properties depend on the intended application surface and application technique, as is known to those skilled in the art.

It can be of advantage if the viscosity of the paint composition is between 1000 and 100000 mPa·s, and preferably between 2000 and 75000 mPa·s, and more preferably between 5000 and 25000 mPa·s, when measured with Brookfield viscometer, spindle number 3, at 50 rpm.

The viscosity can also be measured using a blot method, according to which approximately 40 grams of paint composition that is at the temperature of about 20 degrees Celsius are dropped from the height of approximately 30 cm onto a flat surface and the diameter of the obtained blot, after it has stopped flowing, is measured. The blot diameter can be between 3 and 20 cm, preferably between 5 and 15 cm, and more preferably between 6 and 10 cm.

The viscosity can also be measured using Stormer method according to test method ASTM D562, where, with spindle KU1-75Y viscosity can be between 100 to 500 grams, preferably between 150 and 400 grams, and more preferably between 180 and 350 grams.

In a preferred embodiment, the paint composition, due to its viscosity and rheological properties achieved by appropriate selection of additives, can stay free from settling that would require mechanical stirring before its application for the period of not less than three months.

In a preferred embodiment, the paint composition contains between 10 and 70 weight percent, and preferably between 20 and 50 weight percent, of colour composition.

The colour composition may be used to give the paint composition its colour. The colour composition may also include fillers for the paint composition, which themselves may also contribute to the colour of the paint composition.

Generally, the colour composition may comprise at least one from the group of pigments, fillers, and dies, including titanium dioxide in any form, calcium carbonate, barium sulphate, talc, nepheline syenite, silica and silicate minerals, glass, nanoparticles of silica or nanoparticles of other organic or inorganic moieties, and also organic or inorganic pigments or dies or colourants (also known as pigment pastes) made from them, providing colours such as yellow, red, blue, magenta, green, orange, purple, black, and/or others.

The colour composition can also be modified to give special effects such as pearlescent or metallic, matte, gloss, or reflective appearance, conductivity for electromagnetic spectrum, phosphorescence or fluorescence, and other effects, which are known by those skilled in the art.

Generally, the particles increasing slip resistance act as such due to their shape, hardness, or other chemical or physical properties.

In a preferred embodiment, the paint composition contains between 10 and 75 weight percent, and more preferably between 20 and 50 weight percent, of particles increasing slip resistance.

The particles increasing slip resistance may be at least one from the group of glass, sand, corundum, oxides of metals or metalloids or non-metallic elements, zirconium oxides, aluminium oxides, magnesium oxides, silicon oxides, metal particles, glass granules, ceramic, quartz, bauxite, kaolin clays, porcelain, lava, polymeric particles, plastics, and others.

The diameter of the particles increasing slip resistance can generally be between 50 micrometres and 6 millimetres, preferably between 250 micrometres and 4 millimetres, and more preferably between 500 micrometres and 2 millimetres.

In a preferred embodiment, the particles increasing slip resistance exhibit a hardness of at least 5 on the Mohs Hardness Scale.

The particles increasing slip resistance, the supplementary additives and their mixtures can generally be chosen due to their desired effects for the paint composition and a coating produced with said paint composition.

Published European patent application EP 0 764 699 A2 is using materials like sand, quartz, or glass beads as fillers. In the paint composition of the present invention the role of these materials is different. It is known by those skilled in the art that fillers are materials of small particle size and often without a critical function in a paint composition. In the present invention, materials like quartz, corundum, or sand may be used to increase slip resistance due to their size or shape, which is generally larger than demanded from a filler.

In a preferred embodiment, additives like molochite or bauxites can be used. These materials are usually not suitable for the use as fillers because of their dark colour. Unexpectedly, it was found that the use of dark-coloured bauxite did not affect the colour of white coating composition applied on a roadway surface.

In a preferred embodiment, the paint composition comprises at least one additive from the group of additives of defoamers, grinding aids, coalescents, freeze-thaw stabilisers, pH controllers, special effect additives, thickeners, rheology controllers, plasticisers, biocides, nanoadditives, surfactants, and wetting agents.

As already mentioned, protection is also sought for a method for producing a coating on a surface with the said composition. The method comprises an application step in which the paint composition as described above is applied on the surface, which may be any horizontal, slanted, or vertical surface. The surface may also be a roadway surface, in which case the coating could serve as a roadway signalisation.

The paint composition may be applied at 500 to 10000 grams per square meter, preferably at 750 to 7500 grams per square meter, and more preferably at 1500 to 5000 grams per square meter.

When properly applied, the coating produced with the paint composition as described herein shall have high surface roughness. The surface roughness, which may be characterized by the difference between the lowest and highest points, may be between 100 micrometres and 10 millimetres, preferably between 250 micrometres and 5 millimetres, and more preferably between 500 micrometres and 3 millimetres.

The spacing between ridges can be between 100 micrometres and 50 millimetres, preferably between 250 micrometres and 20 millimetres, and more preferably between 1 and 10 millimetres.

Surface with such roughness and spacing between ridges helps in water drainage from coating applied on a flat surface and shelters some of particles protruding from the coating, which properties are used to enhance the coating's properties.

The paint composition can be used as a coating on a roadway surface. In such case, slip resistance can be measured with a British Pendulum according to the procedure explained in the norm EN 1436:2007+A1:2008 annex D. In case of such application, the desired values are higher than 35, preferably higher than 40, and more preferably higher than 45.

A coating on a roadway surface produced with a paint composition as described above may contain glass microspheres or other reflective elements that can be partially exposed from the applied paint composition in the course of application process or due to wear to provide uncer certain conditions luminance or retroreflected luminance.

The glass microspheres used for such application may have a diameter 70 to 3500 µm, preferably 125 to 1600 µm, and more preferably 212 to 1200 µm. The glass microspheres may have refractive index of 1.5 to 3.0, preferably 1.5 to 2.1, and more preferably 1.5 to 1.9.

Quartz, sand, corundum, bauxite, porcelain, molochite, glass or their mixtures may be used to further increase the slip resistance of the paint composition applied to a roadway surface. The particles may have a particle size from approximately 150 to approximately 5000 micrometres. Other particles and other size ranges can also be used, as should be understood by those skilled in the art.

Durability of the paint composition applied to a roadway surface enhanced with glass microspheres described above can be assessed by measuring coefficient of retroreflected luminance and expressed in the number of weight-adjusted vehicle passes before the coefficient of retroreflected luminance drops below certain value depending on the colour of the coating composition and a particular application.

In a preferred embodiment, durability of the paint composition applied to a roadway surface, whereas it is a white coating composition, should be above 1 million, preferably above 1.5 million, and more preferably above 2 million weight-adjusted vehicle passes per lane where the paint composition was applied before coefficient of retroreflected luminance drops below 100 millicandelas per square meter per lux.

Those skilled in the art shall know that it was reported by Mitrovic and co-workers in their article entitled "Impact of Winter Maintenance on Retroreflection of Road Markings", published in Proceedings of Conference ZIRP2016: Perspectives on Croatian 3PL Industry in Acquiring International Cargo Flows that took place in Zagreb, Croatia on 12th April 2016, on pages 119-127, that each pass of a snow plough during winter road maintenance can be causing a loss of approximately 6.2 millicandelas per square meter per lux and that this value has to be appropriately added to the number of weight-adjusted vehicular passes.

The paint composition can be applied to a surface using a manual or a mechanical roller or a brush of any type as long as it is suitable for the use with water-borne and/or water-dispersible composition of the viscosity and rheology exhibited by the paint composition. The paint composition can also be applied using drawing, extruding or spattering equipment of any type capable of handling this type of paint composition.

In particular, the coating may be a roadway surface marking. Such a roadway surface marking may be any kind of marking produced with the aforementioned method employing the paint composition as described above, that is used in traffic or on a roadway surface in order to convey information relating to traffic or its surroundings. This may also include driver-assistance systems and autonomous road vehicles. The markings may generally be used to provide guidance and convey information to drivers and pedestrians regarding navigational, safety, information, and enforcement issues. The marking may also be used to provide or enhance roadway safety by signalisation or a safe passage due to its high slip resistance.

Roadway surface marking comprises a marking on a roadway surface used by vehicles or pedestrians, and markings on road-related infrastructure such as a barrier, a traffic or road sign or post or a utility pole, a building structure, a road obstruction, and the like.

In a preferred embodiment, the method further comprises an additional enhancement step in which additional enhancement particles are applied mechanically to the surface.

The additional enhancement particles may comprise, but are not limited to glass in forms of microspheres, beads, crystals, or irregular pieces, corundum, sand, silicon oxide, oxides of metallic and non-metallic elements, ceramic particles, ion-exchange and other resins, moisture absorbers, molecular sieves, quantum dots, engineered mechanical objects, engineered particles of various shapes, chemical or physical molecular absorbers, acids, bases, metal particles, elements radiating in electromagnetic spectrum, pigments, colorants, dies, and other particles or their mixtures that can furnish the effects desired for a particular coating. Effect additives may include changes to drying, reflectivity and retroreflectivity, slip resistance, surface appearance, electric conductivity, colour, luminescence, visibility for radar or Lidar or other device capable of recognising the electromagnetic spectrum, cooling or warming, and other. The particles and effect additives might be added solo or in mixtures.

Generally, the additional enhancement particles and effect additives may be applied as solids, powders, slurries, dispersions, solutions, liquids, gases.

The additional particles can be dropped-on or injected under pressure or incorporated onto the surface of the applied paint composition.

The additional particles applied during the enhancement step can be partially embedded in the surface of the applied paint, wherein preferably the level of embedment of the particles is between 5 and 95 percent and depends on the type of particle and the desired effect and should be known by those skilled in the art.

The enhancement step may include modelling of the applied coating composition with a gas or gases injected under pressure to obtain uneven surface and/or to achieve or enhance properties like drying, embedment or activation of the enhancing additives, and other effects.

This enhancement step can preferably be carried out simultaneously with and/or immediately after the coating application step.

In a preferred embodiment, the enhancement step is carried out before the surface of the applied paint composition has set or cured, preferably while the paint composition is still in a liquid or semi-liquid form.

The method may further comprise a treatment step in which the applied paint composition, either with or without the enhancement particles, is treated with radiation within any frequency or frequencies of the electromagnetic spectrum to obtain effects such as hardness, durability, unevenness, slip resistance, colour, conductivity, visibility, emissions within the electromagnetic spectrum, and other.

The treatment step may preferably be carried out simultaneously and/or sequentially with the application step and/or the enhancement step.

The applicant has carried out experiments preparing paint compositions and producing a coating applied to a roadway surface with the said paint compositions. The results of these experiments shall be presented in the following paragraphs.

The experimental coating compositions were prepared from commercially-available materials, according to the compositions shown in Table 1. Properties in terms of viscosity, contents of volatile organic compounds, and contents of inorganic materials are provided in Table 2.

In the exemplary experimental coating compositions as detailed in Table 1, the "Waterborne binder" corresponds to an aqueous solution or dispersion of the water-borne and/or water-dispersible resin. The "White pigment" and "Filler" correspond to the colour composition. The "Coalescent" and the "Additives package" correspond to additives. "Sand", "Corundum", and "Bauxites" correspond to particles increasing slip resistance.

Additives were chosen as necessary to prepare the paint composition and are known to those skilled in the art.

In an exemplary implementation of the application step, the prepared paint composition was applied by hand, using a roller having ridges protruding 2 cm, to a roadway carrying traffic load between 5000 and 10000 weight-adjusted vehicles daily, as white-coloured stripes, such as are commonly known as "zebra" marking. Achieved was a highly rough surface with high ridges, reaching approximately 1 millimetre in height and the distance between the ridges between 0.5 and 2.5 millimetres.

The exemplary coating composition 1 was applied as samples 1 and 2 and the exemplary coating composition 2 was applied as sample 3, with the applied weight of the marking between 1500 and 2500 grams per square metre.

The control system was applied simultaneously, with the same type of equipment, and comprised a commercially-purchased acrylic-based monomeric and oligomeric paint designed for application by rolling that polymerised on the road surface upon prior addition of an organic peroxide initiator. The applied weight of the control system was between approximately 2500 and 3500 grams per square metre.

For samples 1 and 2 and the control system, during the application and while the materials were still in a liquid or a semi-liquid stage - as an exemplary implementation of the enhancement step - as additional enhancement particles were added commercially purchased glass microspheres belonging to Class A according to normative classification per ISO EN 1423:2012, with size between 212 and 850 micrometres, appropriately coated to obtain chemical adhesion, and intermixed with 20 weight percent of particles that due to their shape and hardness increased slip resistance of the coating.

For sample 2, during the application and while the materials were still in a liquid or semi-liquid stage - as an exemplary implementation of the enhancement step - as additional enhancement particles were added commercially purchased glass microspheres belonging to Class A according to normative classification per ISO EN 1423:2012, with size between 212 and 850 micrometres, appropriately coated to obtain chemical adhesion, intermixed with 20 weight percent of particles that due to their shape and hardness increased slip resistance of the coating, and with 7 weight percent of an ion-exchange resin designed for scavenging of ammonia ions. Scavenging of ammonia ions was deemed advantageous because the selected acrylic water-borne binder used for preparation of exemplary coating composition 1 is known to dry while ammonia evaporates.

The additional enhancement particles were applied by spraying under mild pressure at the quantity of approximately 500 grams per square metre. Both systems were permitted to dry on the surface for the period of approximately 45 minutes, which was sufficient for drying at the air temperature of about 25 degrees Celsius, relative humidity of about 50 percent and with wind of approximately 0.2 metres per second.

Obtained results, measured by coefficient of retroreflected luminance and by luminance coefficient under diffuse illumination, both expressed in the units of millicandela per square metre per lux, the achieved dimensionless skid resistance, and the depth of the achieved ridges expressed in millimetres and their spacing also in millimetres are given in Table 3.

Surprisingly, the results of the field test have demonstrated that the experimental product furnished values similar to the standard material in all three critical parameters after approximately 2 million of weight-adjusted vehicle passes. Moreover, the height of the ridges, after exposure to the vehicular traffic, did not decrease significantly. Such results are unexpected, indeed, because of lower applied weight of the experimental paint composition and the fact that with waterborne paints systems maintaining uneven ridges with high surface roughness defined as the ratio between the highest and the lowest point of the applied coating, after so many weight-adjusted vehicles passes has never been observed or reported.

Moreover, contrary to the expectations and common knowledge, sample 3 prepared with incorporation of dark-coloured bauxites acting as a slip-reducing particle did not differ in colour from the other samples of the coating composition, as measured by luminance coefficient under diffuse illumination.

Very unusually and highly surprisingly, in sample 3, coefficient of retroreflected luminance increased after usage of the coating over winter time and approximately 1 million of weight-adjusted vehicular passes. Such effect, due to incorporation of glass microspheres in the coating composition, could be expected from coatings that are applied with heat, but has not been so far reported or measured for waterborne coatings.

Because the applied weight of the experimental paint composition was lower than the applied weight of the standard system and the results after approximately 2 million weigh-adjusted vehicle passes were comparable, the disclosed paint composition can be considered as a highly environmentally-friendly material not only because it did not contain any undesired ingredients, but also because lower materials usage is one of the key sustainability parameters. Drying times of the experimental materials were longer than measured for control system, which was expected. However, the drying time was not excessive, as could be recognised from a report by Fiolic and co-workers, entitled "The Influence of Drying of the Road Marking Materials on Traffic During the Application of Markings", published in Proceedings of ZIRP-LST Conference that took place in Opatija, Croatia on 1-2 June 2017, on pages 109-118, describing drying times of standard solvent-borne paints used for marking of pedestrian 'zebra' crossings.

**Table 1. Composition of the exemplary paint composition.**

| Material type | Supplier | Coating composition 1 | Coating composition 2 |
|---|---|---|---|
| | | Quantity | Quantity |
| Waterborne binder solution or dispersion | Dow Chemical Company; Midland, Michigan, USA | 28.5 kg | 28,5 kg |
| White pigment: rutile titanium dioxide | Grupa Azoty; Tarnów, Poland | 15.5 kg | 15.5 kg |
| Filler: calcium carbonate | Omya; Oftringen, Switzerland | 13.5 kg | 13.5 kg |
| Additives package comprising defoamer, grinding aid, dispersant, surfactant, pH regulator, thickener, coalescent, plasticiser, rheology modifier | Standard materials from numerous suppliers | 2.5 kg | 2.5 kg |
| Sand, 50-1200 µm | Sibelco; Antwerp, Belgium | 7.5 kg | - |
| Bauxites, 500-1700 µm | Kuhmichel GmbH; Ratingen, Germany | - | 7.5 kg |
| Corundum, 200-1700 µm | Treibacher GmbH; Althofen, Germany | 12.5 kg | 7.5 kg |
| Glass microspheres, 212-850 µm | M. Swarovski GmbH; Amstetten, Austria | 20.0 kg | 25.0 kg |

**Table 2. Properties of the produced exemplary paint composition.**

| | | Coating composition 1 | Coating composition 2 |
|---|---|---|---|
| Property | Unit | Value | Value |
| Viscosity (blot) | Centimetres | 6.0 | 7.0 |
| Viscosity (Stormer method) | grams | 203 | 190 |
| Volatile Organic Compounds | Per cent | 0.1 | 0.1 |
| Inorganic materials content | Per cent | 84 | 83 |

**Table 3. Results of field testing.**

| Parameter | Initial values | | | | Values after 2 million weight-adjusted vehicles passes | | | After 1 million passes |
|---|---|---|---|---|---|---|---|---|
| | Control | Sample 1 | Sample 2 | Sample 3 | Control | Sample 1 | Sample 2 | Sample 3 |
| Drying time (minutes) | 11 | 39 | 23 | 40 | - | - | - | - |
| Coefficient of retroreflected luminance | 360 | 328 | 217 | 435 | 197 | 180 | 199 | 471 |
| Luminance coefficient under diffuse illumination | 117 | 98 | 107 | 132 | 109 | 128 | 126 | 120 |
| Skid resistance | 85 | 55 | 39 | 57 | 72 | 55 | 49 | 57 |
| Ridge height | 0.1-1.0 | 0.1-1.0 | 0.1-1.0 | 0.1-1.2 | 0.1-0.9 | 0.1-.07 | 0.1-0.7 | 0.1-1.1 |
| Ridge spacing | 1.0-2.5 | 1.0-2.5 | 1.0-2.5 | 0.8-2.5 | - | - | - | - |

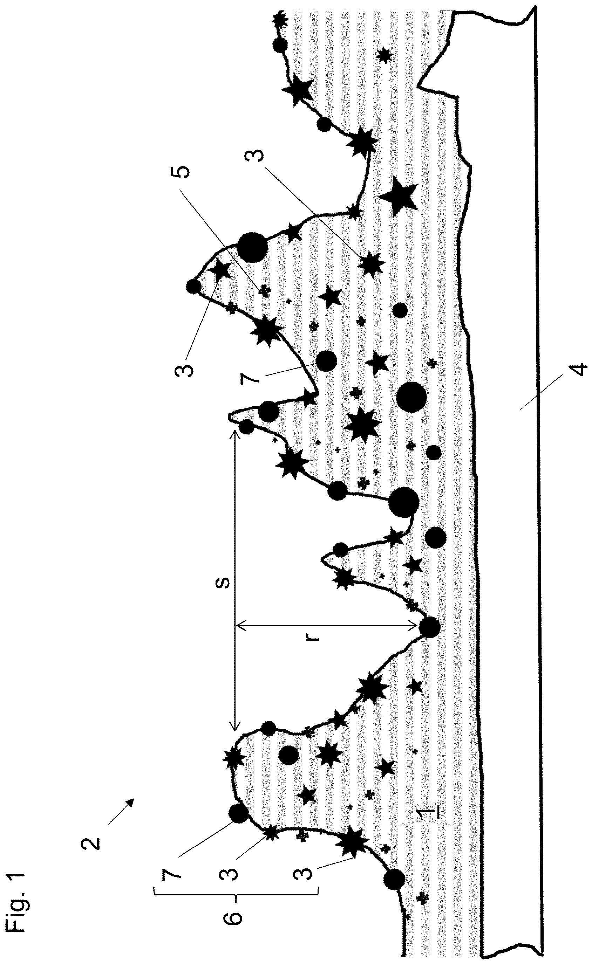

Exemplary implementation of an embodiment of the paint composition 1 to form a coating 2 is shown in Figure 1, where a cross-section of the paint composition layer is shown on the coated surface 4, which may for example be a roadway surface, and visible are particles enhancing slip resistance 3, enhancement particles 5, as well as glass microspheres 7, both inside the paint layer and on top of it. In the embodiment shown, additional particles 6, which may be applied mechanically to the surface of the coating 2 during production of the coating 2 in an enhancement step, comprise particles enhancing slip resistance 3 and glass microspheres 7. The additional particles 6 are partially embedded into the surface of the coating 2.

The measurement of surface roughness, designated by r, defined as the distance between the highest and the lowest point of the applied coating, is shown. The measurement of the ridge spacing, designated by s, defined as the distance between ridges of approximately the same height is also shown.

It shall be known by those skilled in the art that such a drawing is only schematic, not done to scale, and provided only to illustrate the concept and is not meant to be encompassing all of the features of the coating.

## Claims

1. Paint composition (1) for producing an environmentally-friendly coating (2) with rough surface and high slip resistance, wherein the paint composition (1) comprises a water-borne and/or water-dispersible resin, colour composition, and particles increasing slip resistance (3), wherein the paint composition (1) contains
- between 5 and 75 weight percent of water-borne and/or water-dispersible resin, preferably between 5 and 70 weight percent, and more preferably between 10 and 50 weight percent of water-borne and/or water-dispersible resin,
- between 5 and 90 weight percent of colour composition, preferably between 10 and 80 weight percent, and more preferably between 30 and 70 weight percent, of colour composition,
- between 10 and 85 weight percent of particles increasing slip resistance (3), preferably between 10 and 75 weight percent, and more preferably between 20 and 50 weight percent, of particles increasing slip resistance (3).

2. Paint composition (1) according to claim 1, wherein the paint composition (1) contains less than 10 weight percent, preferably below 5 weight percent, and more preferably below 2 weight percent, of total organic gases.

3. Paint composition (1) according to one of the preceding claims, wherein the paint composition (1) contains less than 2 weight percent, preferably less than 1 weight percent, and more preferably less than 0.5 weight percent, of any chemicals that are classified as toxic or highly toxic.

4. Paint composition (1) according to one of the preceding claims, wherein the colour composition comprises at least one from the group of pigments and fillers comprising titanium dioxide, calcium carbonate, barium sulphate, nepheline syenite, talc, and any organic or inorganic pigment or dye.

5. Paint composition (1) according to one of the preceding claims, wherein the paint composition (1) comprises at least one additive from the group of additives of defoamers, grinding aids, coalescents, freeze-thaw stabilisers, pH controllers, special effect additives, thickeners, rheology controlling additives, biocides, quantum dots, surfactants, nanoadditives, wetting agents.

6. Paint composition (1) according to one of the preceding claims, wherein the particles increasing slip resistance (3) are at least one from the group of glass, sand, corundum, silicon oxide, oxides of metals or metalloids or non-metallic elements, metal particles, glass granules, plastic, organic or inorganic polymeric particles, ceramics.

7. Paint composition (1) according to one of the preceding claims, wherein the diameter of the particles increasing slip resistance (3) is between 50 micrometres and 6 millimetres, preferably between 250 micrometres and 4 millimetres, and more preferably between 500 micrometres and 2 millimetres.

8. Paint composition (1) according to one of the preceding claims, wherein the particles increasing slip resistance (3) exhibit a hardness of at least 5 on the Mohs Hardness Scale.

9. Paint composition (1) according to one of the preceding claims, wherein the paint composition (1) has a viscosity, measured by the blot method, between 3 and 20 centimetres and/or a viscosity between 100 and 500 grams, measured using Stormer method according to test method ASTM D562 with spindle KU1-75Y.

10. Paint composition (1) according to one of the preceding claims, wherein the paint composition (1) further comprises additional optional enhancement particles (5) that comprise at least one supplementary additive from the group of beads, crystals, or irregular pieces, ion-exchange and other resins, moisture absorbers, molecular sieves, chemical or physical molecular absorbers, acids, bases, metal particles, quantum dots, elements radiating in the electromagnetic spectrum, pigments, colourants and dies.

11. Method for producing a coating (2) on a surface (4), including a roadway surface, the method comprising an application step in which the paint composition (1) according to claim 1 to 11 is applied on any surface (4) that is horizontal, slanted, or vertical using rolling, splattering, drawing, extruding.

12. Method for producing a coating (2) on a surface according to the preceding claim, wherein the coating (2) is a roadway surface marking.

13. Method for producing a coating (2) on a surface (4) according to claim 11 or 12, the method further comprising an enhancement step in which additional particles (6) are applied mechanically to the surface, wherein preferably the enhancement step is carried out simultaneously with and/or immediately after the application step.

14. Method for producing a coating (2) on a surface (4) according to one of claims 11 to 13, wherein the additional particles (6) applied during the enhancement step are partially embedded in the surface (4) of the applied paint, wherein preferably the level of embedment of the particles is between 5 and 95 percent.

15. Method for producing a coating (2) with the paint composition (1) according to one of claims 11 to 14, wherein a surface roughness is achieved in form of regular or irregular ridges, with the height to width ratio of at least 0.1 to 5.0 and the height, measured between the low and high point of the applied coating (2), is higher than 250 micrometres.

16. Method for producing a coating (2) on a surface (4) according to one of claims 11 to 15, the method further comprising a treatment step in which the applied paint composition (1) is subjected to mechanical, chemical, or electromagnetic radiation of any frequency treatment to alter visibility in the electromagnetic spectrum, and/or hardness or softness or drying of the applied paint composition (1), and/or unevenness of the surface of the applied paint composition (1), and/or modify slip resistance of the applied paint composition (1), and/or durability of the applied paint composition (1), wherein preferably the treatment step is carried out simultaneously and/or sequentially with the application step and/or the enhancement step.
